# EUROPÄISCHE PATENTSCHRIFT

(11) **EP 2 008 447 B1**
(45) Veröffentlichungstag und Bekanntmachung des Hinweises auf die Patenterteilung: **01.05.2013**
(21) Anmeldenummer: 07724295.6
(22) Anmeldetag: 11.04.2007
(51) Int. Cl.: H04N 5/232, G03B 13/02

(54) **SUCHERSYSTEM FÜR EINE KAMERA**
VIEWFINDER SYSTEM FOR A CAMERA
SYSTÈME DE VISEUR POUR CAMÉRA

(30) Priorität: 13.04.2006 DE 102006018865
(43) Veröffentlichungstag der Anmeldung: 31.12.2008
(73) Patentinhaber: Arnold & Richter Cine Technik GmbH & Co. Betriebs KG, 80799 München (DE)
(72) Erfinder: JACUMET, Klaus, 80995 München (DE)
(74) Vertreter: Ninnemann, Detlef
(86) Internationale Anmeldenummer: PCT/EP2007/003357
(87) Internationale Veröffentlichungsnummer: WO 2007/118701

(56) Entgegenhaltungen:
- DE-A1- 3 135 950
- JP-A- 2000 147 602
- US-A- 4 498 750
- US-A- 5 926 655

## Beschreibung

Die Erfindung betrifft ein Suchersystem für eine Kamera, insbesondere für eine Laufbildkamera, gemäß dem Oberbegriff des Anspruchs 1.

Zur Betrachtung eines mittels einer Stehbild-, Laufbild- oder Videokamera aufzunehmenden Bildes oder einer Bildfolge wird aus dem durch das Kameraobjektiv verlaufenden Aufnahmestrahlengang ein Sucherstrahlengang mittels eines Strahlenteilers oder einer Spiegelreflexeinrichtung abgezweigt und als Sucherbild von einer Übertragungsoptik als reelles Bild z. B. auf einer Mattscheibe oder Faserplatte oder als Luftbild abgebildet, wo es durch einen Okular betrachtet und beurteilt werden kann. Den Sucherabschluss der Kamera bildet ein Augenabschluss aus einem weichen Kunststoff, der sich um das Auge herum an den Kopf eines Kameramanns anlegt und verhindert, dass seitlich eindringendes Fremdlicht das betrachtete Sucherbild verschlechtert. Der Augenabschluss kann wahlweise als eine an das Gesichtsfeld des Kameramanns anatomisch angepasste Augenmuschel oder nach Art eines Faltenbalges ausgebildet sein. Üblicherweise wird entweder über die anatomisch geformte Augenmuschel oder über den Faltenbalg ein Ledertuch gezogen, um einen angenehmeren Hautkontakt zu haben.

Befindet sich das Auge des Kameramanns nicht am Augenabschluss, so kann Fremdlicht über das Suchersystem der Kamera in entgegengesetzter Richtung der aus dem Aufnahmestrahlengang abgezweigten Sucherstrahlen in das Kamerainnere eindringen, an der Rückseite des Kameraobjektivs in den Aufnahmestrahlengang reflektiert oder an der Mattscheibe bzw. Faserplatte im Sucherstrahlengang gestreut werden und dadurch zu Fehlbelichtungen von Film- oder Videobildern führen und damit die Film- oder Videoaufnahme unbrauchbar machen.

Zur Vermeidung des Eindringens vom Fremdlicht in das Suchersystem bei nicht an den Augenabschluss angelegtem Kopf ist es bekannt, zwischen dem Augenabschluss und dem Okular eine Verschlussblende anzuordnen, die mit einem an die Außenseite des Kameragehäuses geführten Hebel verbunden ist, so dass der Kameramann durch manuelles Betätigen des Hebels die Verschlussblende zur Bildbetrachtung bei an den Augenabschluss angelegtem Kopf öffnen und nach der Bildbetrachtung, jedoch vor dem Entfernen des Kopfes vom Augenabschluss wieder schließen kann. Diese bekannte Vorrichtung zum Verhindern des Eindringens von Fremdlicht in das Suchersystem einer Kamera setzt jedoch ein Höchstmaß an Konzentration des Kameramanns voraus, da bei zu frühem Öffnen oder verspätetem Schließen der Verschlussblende bei nicht am Augenabschluss befindlichen Kopf Fremdlicht in das Suchersystem der Kamera eindringen und zu Fehlbelichtungen des Filmes bzw. Videos führen kann.

Aus diesem Grunde wurden Steuervorrichtungen für eine im Suchersystem einer Kamera angeordnete Verschlussblende entwickelt, bei denen der Druck des Kopfes auf den Augenabschluss über eine Mechanik die Verschlussblende öffnet und eine mit der Mechanik verbundene Feder die Verschlussblende schließt, wenn der Kameramann nicht mehr mit dem Kopf gegen den Augenabschluss drückt. Diese Vorrichtung zum automatischen Öff nen und Schließen der Verschlussblende weist jedoch den Nachteil auf, dass auf das Gesichtsfeld um das Auge des Kameramanns bei der Bildbetrachtung ständig Druck ausgeübt wird, was als unangenehm empfunden wird.

Aus der DE 31 35 950 A1 ist eine Vorrichtung zum Reduzieren bzw. Ausblenden der in einen einäugigen Spiegelreflexsucher einfallenden Störlichtmenge bekannt, die ein im Kamerasucher angeordnetes lichtempfindliches Element enthält, das in Abhängigkeit von dem durch das Okular des Suchers eintretenden Störlicht eine Spannung abgibt. Ein Komparator nimmt das Ausgangssignal des lichtempfindlichen Elementes auf und erzeugt ein Steuersignal, sobald die Intensität des Störlichtes einen vorbestimmten Wert überschreitet. In Abhängigkeit von dem Steuersignal wird eine Verschlussblende geschlossen, so dass Störlicht nicht durch das Suchersystem in das optische System der Kamera einstreut und die Bildqualität verschlechtern kann. Damit der Kameramann das aufzunehmende Objekt durch den Sucher auch dann beobachten kann, wenn das in das optische System der Kamera gelangende Störlicht herabgesetzt wird, kann bei der bekannten Vorrichtung anstelle der Verschlussblende eine Aperturblende oder ein Filter eingesetzt werden.

Damit bei der bekannten Vorrichtung zum Ansteuern einer im Sucherstrahlengang angeordneten Verschlussblende nicht die aus den Aufnahmestrahlen abgezweigten Sucherstrahlen vom lichtempfindlichen Element empfangen werden und dementsprechend zu einem Schließen der Verschlussblende auch dann führen, wenn sich das Auge des Kameramanns am Kamerasucher befindet, ist in der Okularanordnung des Suchersystems eine kleine Wand vorgesehen, die die vom Aufnahmestrahlengang abgezweigten Sucherstrahlen abschattet, so dass das lichtempfindliche Element in Form einer Fotodiode oder eines Fototransistors nur das durch das Okular einfallende Störlicht aufnimmt. Trotz dieser Maßnahme kann bei entsprechend eingestellter Empfindlichkeit der Einrichtung zur Ansteuerung der Verschlussblende nicht verhindert werden, dass die am Auge oder der Sehhilfe des Kameramanns oder einer in den Sucher eingesetzten Linse zur Korrektur von Sehfehlern die Sucherstrahlen vom Endabschluss des Suchers reflektiert werden, auf das lichtempfindliche Element fallen und ein Schließen der Verschlussblende auslösen, obwohl sich das Auge des Kameramanns am Augenabschluss des Kamerasuchers befindet.

Ein weiterer Nachteil der bekannten Vorrichtung besteht darin, dass bei geringer Beleuchtung mangels in den Kamerasuchers einfallenden Störlichts die Verschlussblende geöffnet ist und bei plötzlich einfallendem Störlicht beispielsweise bei einem Wechsel von Licht und Schatten kurzzeitig bis zum Schließen der Verschlussblende durch ein vom lichtempfindlichen Element abgegebenes Steuersignal Störlicht in das Suchersystem einfällt und zu Fehlbelichtungen führt.

Außerdem kann bei minimaler Entfernung des das Auge des Kameramanns umgebenden Gesichtsfeldes vom Augenabschluss des Kamerasuchers Störlicht in das Suchersystem der Kamera eindringen und bei entsprechender Einstellung der Empfindlichkeit der Steuereinrichtung zum Schließen der Verschlussblende führen, obwohl die geringe Störlichtmenge nicht zu Fehlbelichtungen führen würde. Um eine Bildbetrachtung auch in solchen Fällen zu ermöglichen, ist bei der bekannten Vorrichtung eine aufwendige Justierung der Ansprechschwelle der Einrichtung zum Ansteuern der Verschlussblende erforderlich.

Aus der JP 2000-147602A ist ein in eine Spiegelreflexkamera integriertes Suchersystem mit einem Sucherstrahlengang bekannt, der von einem Aufnahmestrahlengang zur Belichtung eines Filmbildes, einer Bildröhre oder eines CCD-Sensors abgezweigt wird. Das Suchersystem enthält eine Mattscheibe, ein Pentaprisma und ein Okular mit einem Strahlenteiler, der das Sucherbild sowohl über eine Linse zum CCD-Sensor als auch über eine Verschlussblende zu einem Augenabschluss abzweigt. Nahe dem Augenabschluss ist eine Sensoreinrichtung bestehend aus einer LED und einem Fotosensor zur berührungslosen Erfassung eines am Augenabschluss des Suchersystems befindlichen Auges einer das aufzunehmende Bild durch das Okular betrachtenden Person angeordnet, deren Sensorsignal an eine die Verschlussblende ansteuernde Steuereinrichtung abgegeben wird, so dass die Verschlussblende über das Suchersystem in die Spiegelreflexkamera eindringendes Fremdlicht ausblendet, wenn sich das Auge der das aufzunehmende Bild betrachtenden Person nicht am Augenabschluss befindet.

Die Ansteuerung der Verschlussblende durch die Steuereinrichtung der Spiegelreflexkamera hängt jedoch nicht nur von der Anwesenheit eines Betrachterauges am Augenabschluss, sondern auch zusätzlichen Bedingungen zur Ansteuerung der Verschlussblende wie der Durchführung einer Bildaufnahme und der Stellung eines Einstellschalters zur Auswertung der Kameraposition ab, die es erforderlich machen, dass die die Verschlussblende ansteuernde Steuereinrichtung in das Steuersystem der Spiegelreflexkamera integriert und nicht davon unabhängig ist, so dass der vor Streulicht geschützte Sucherabschluss keine eigenständige Einheit bildet.

Aus der DE 31 35 950 A1 ist ein einäugiger Spiegelreflexsucher bekannt, bei dem das durch das Okular eintretende Störlicht mithilfe eines lichtempfindlichen Elements erfasst wird. Ist das Okular nicht abgedeckt, so gibt das lichtempfindliche Element eine Spannung an einen Komparator ab, welcher ein Steuersignal erzeugt, welches die Schließung einer sich im Lichtpfad befindenden Verschlussblende veranlasst. Diese Anordnung bewirkt gleichsam eine passive Erfassung der Anwesenheit eines Auges oder eines Kopfes am Sucher.

Aus der US 5,926,655 A ist ein Blickrichtungsdetektor bekannt, bei dem mittels Infrarot-Leuchtdioden der Augapfel eines Photographen angeleuchtet und über das vom Augapfel des Photographen reflektierte Licht die Blickrichtung des Photographen ermittelt wird, um den Bereich bzw. die Position zu erfassen, die der Photograph im Sucherbild betrachtet. Die Erfassung der Blickrichtung des Photographen setzt jedoch nur voraus, dass sich das Auge des Photographen hinreichend nahe am Sucher befindet, so dass das von den Infrarot-Leuchtdioden abgegebene Licht vom Augapfel des Photographen reflektiert wird. Dabei besteht aber weiterhin die Gefahr, dass auch bei einem nur geringen Abstand des Auges des Photographen vom Sucher Fremdlicht in den Sucherstrahlengang und damit in den Strahlengang der Kamera eindringen kann.

Aus der US 4,498,750 A ist eine einäugige Spiegelreflexkamera bekannt, bei der ein schwenkbarer Spiegel im Aufnahmestrahlengang hinter dem Objektiv angeordnet ist und im Betrachtungszustand den Aufnahmestrahlengang über ein Pentaprisma in den Sucher ablenkt, während im Aufnahmezustand der Spiegel hochgeklappt ist und den Aufnahmestrahlengang zur Bildbelichtung freigibt. Der Spiegel weist einen lichtdurchlässigen Abschnitt auf, der einen Teil des Aufnahmestrahlengangs zu einem Lichtsensor durchlässt. Dieser lichtdurchlässige Abschnitt wird beim Hochschwenken des Spiegels im Aufnahmezustand mit einer Blendenplatte abgedeckt, so dass im Aufnahmezustand kein Fremdlicht über den Sucher in den Aufnahmestrahlengang zur Fehlbelichtung des Aufnahmebildes gelangen kann. Die bekannte Spiegelreflexkamera weist jedoch keine Sensoreinrichtung auf, mit der erfasst wird, ob der Sucher abgedeckt ist oder nicht bzw. ob das Auge des Fotografen am Sucher anliegt und damit das Eindringen von Fremdlicht verhindert.

Bei einer Laufbildkamera mit einer Abzweigung eines Videostrahlengang aus dem Sucherstrahlenstrahlengang zu einem CCD-Sensor, der parallel zur Belichtung eines Laufbildfilmes Videosignale zur Betrachtung auf einem Videomonitor oder zur Aufzeichnung auf einem Videorecorder abgibt, führt jedoch in das Suchersystem eindringendes Fremdlicht zu deutlich sichtbaren Lichtreflexen im CCD-Sensor, auch wenn die Laufbildkamera nicht zur Belichtung eines Laufbildfilmes betrieben wird.

Aufgabe der vorliegenden Erfindung ist es, ein Suchersystem der eingangs genannten Art anzugeben, bei dem der Sucherabschluss unabhängig von Funktionen oder Einstellungen einer Kamera das Eindringen von Fremdlicht in den Sucherstrahlengang verhindert, störende Lichtreflexe auch dann eliminiert, wenn die Kamera keine Bildbelichtungen durchführt, und der als eigenständige Einheit mit dem Suchersystem verbunden werden kann.

Diese Aufgabe wird erfindungsgemäß durch die Merkmale des Anspruchs 1 gelöst.

Die erfindungsgemäße Lösung stellt ein Suchersystem bereit, bei dem der Sucherabschluss unabhängig von Funktionen oder Einstellungen einer Kamera das Eindringen von Fremdlicht in den Sucherstrahlengang verhindert, störende Lichtreflexe auch dann eliminiert, wenn die Kamera keine Bildbelichtungen durchführt, und der als eigenständige Einheit mit dem Suchersystem verbunden werden kann.

Da bei dem erfindungsgemäßen Suchersystem die Verschlussblende stets geschlossen ist, wenn sich das Auge des Kameramanns nicht in einem vorgegebenen Abstand zum Okular, Sucher oder Augenabschluss befindet, kann auch ein plötzlicher Fremdlichteinfall in das Suchersystem nicht zu Fehlbelichtungen führen. Da weiterhin die Steuereinrichtung zur Ansteuerung der Verschlussblende ausschließlich auf die Erfassung des Auges ausgerichtet ist, bleiben die aus dem Aufnahmestrahlengang abgezweigten Sucherstrahlen ohne Einfluss auf die Ansteuerung der Verschlussblende und die Ansprechschwelle der Steuereinrichtung kann ausschließlich auf den Augenabstand justiert werden, so dass eine gerade noch zulässige Fremdlichtmenge exakt und mit einfachen Mitteln eingestellt und damit die gesamte Vorrichtung zum Verhindern des Eintretens von Fremdlicht in das Suchersystem der Kamera einfach aufgebaut werden kann.

Da die Steuereinrichtung mit einer berührungslos arbeitenden Sensoreinrichtung zusammenwirkt, kann nicht nur das Eindringen von nicht zu Fehlbelichtungen führenden Fremdlichts durch einen geringen Abstand des Gesichtsfelds des Betrachters vom Augenabschluss zugelassen werden, sondern es wird während der Bildbetrachtung auch keinerlei Druck auf das Gesichtsfeld des Kameramanns ausgeübt.

Da der Sucherabschluss als eigenständige Einheit konzipiert ist, die einen Linsenhalter zur Aufnahme einer Sehfehler des Bildbetrachters ausgleichenden Korrekturlinse oder die eine Heizung zum Beheizen des Sucherabschlusses und/oder des Linsenhalters aufweist, kann das Suchersytem einer Kameras in einfacher Weise dadurch nachgerüstet werden, dass anstelle einer mechanischen und manuell zu schließenden Augenmuschel eine magnetische Augenmuschel mit Fremdbeheizung aufgesetzt werden kann. Dafür ist für die Beheizung des Sucherabschlusses lediglich eine Schnittstelle zur elektrischen Verbindung des Sucherabschlusses mit der Stromversorgung der Kamera erforderlich.

In einer ersten Variante der erfindungsgemäßen Lösung ist ein kapazitiver oder induktiver Sensor zur Erfassung der durch die Annäherung des Auges oder Kopfes eines Benutzers an den Augenabschluss veränderten Kapazität oder Induktivität und Abgabe eines Sensorsignals an die Steuereinrichtung vorgesehen, die die Antriebseinrichtung zum Öffnen oder Schließen der Verschlussblende ansteuert.

Diese berührungslos arbeitende Sensoreinrichtung erfasst Kapazitätsänderungen zwischen den beiden Elektroden eines Kondensators oder Induktivitätsänderungen im Magnetfeld einer Spule, wenn sich ein Körperteil am Augenabschluss befindet und kann beispielsweise so eingestellt werden, dass nur bei einer lichtdichten Anlage des das Auge umgebenden Gesichtsfeldes des Kameramanns am Augenabschluss die Verschlussblende geöffnet wird.

In einer zweiten Variante der erfindungsgemäßen Lösung besteht die Sensoreinrichtung aus einem Sender, der in den Augenabschluss gerichtete Signale mit Wellenlängen abgibt, die außerhalb der Wellenlänge sichtbaren Lichts liegen, und einem Empfänger, der auf die vom Sender abgegebenen Signale abgestimmt ist, die vom Auge oder dem das Auge umgebenden Gesichtsfeld reflektierten Signale empfängt und in Abhängigkeit vom Signalempfang Sensorsignale an die Steuereinrichtung abgibt.

Durch die Ausgestaltung der Sensoreinrichtung als Sende-Empfangseinrichtung ist zum Einen eine miniaturisierte Ausbildung der Sensoreinrichtung und deren Anordnung in einem die Bildbetrachtung nicht störenden Bereich des Suchersystems bzw. des Augenabschlusses möglich und zum Anderen eine sichere Erfassung des Auges eines Bildbetrachters am oder in einem vorgebbaren Abstand vom Augenabschluss gewährleistet. Des Weiteren kann diese berührungsfrei arbeitende Sensoreinrichtung sehr feinfühlig justiert werden, so dass auch geringe Mengen an Fremdlicht als gerade noch tolerabel eingestuft werden können, die noch nicht zu einem Schließen der Verschlussblende führen, insbesondere dann, wenn der Benutzer eine Berührung mit der Augenmuschel vermeiden will und lieber einen minimalen Spalt zwischen Kopf und Augenmuschel hält.

Da die vom Sender abgegebenen Signale Wellenlängen aufweisen, die außerhalb der Wellenlängen sichtbaren Lichts liegen, können die vom Auge des Bildbetrachters in das Suchersystem zurück reflektierten Messstrahlen nicht zu Fehlbelichtungen des Filmes oder Videobandes oder einer Irritation des Auges des Benutzers führen.

In bevorzugter Ausführungsform ist die Sende- und Empfangseinrichtung der Sensoreinrichtung als Reflexlichtschranke und insbesondere als Infrarot-Reflexlichtschranke ausgebildet, die sehr kurze Lichtblitze aussendet und empfängt.

Die im Infrarotbereich liegenden Messsignale unterscheiden sich bezüglich der Wellenlänge deutlich von den Wellenlängen sichtbaren Lichts und ermöglichen damit eine einfache Abstimmung. Sie sind zudem für den Bildbetrachter nicht sichtbar und können daher die Bildbetrachtung nicht stören oder beeinflussen. Durch die Begrenzung der vom Sendeteil abgegebenen Messsignale auf sehr kurze Lichtblitze mit einer Frequenz im kHz-Bereich wird das Auge des Betrachters zudem nur vernachlässigbar und weit unterhalb zulässiger Grenzwerte belastet. Außerdem wird in der elektronischen Auswertung der Steuereinrichtung ausschließlich ein Empfängersignal beachtet, das zeitlich mit dem Aussenden der Lichtblitze korreliert, so dass das Ansprechen der Verschlussblende auf Fremdlicht effektiv ausgeschlossen ist.

Durch mehrere am Umfang des Sucherabschlusses verteilt angeordnete Sensoren, die mindestens eine Licht emittierende Diode als Sender und mindestens eine Fotodiode oder einen Fototransistor als Empfänger aufweisen, ist eine gleichmäßige und vollständige Erfassung eines in den Sucher blickenden Kameramanns gewährleistet. Vorzugsweise sind zwei Sensoren diametral zueinander am Umfang des Sucherabschlusses angeordnet, wobei jeweils zwei Licht emittierende Dioden und eine Fotodiode oder ein Fototransistor einen Sensor bilden, während die Fotodiode oder der Fototransistor zwischen den Licht emittierenden Dioden angeordnet ist.

Durch die redundante Anordnung von jeweils zwei Licht emittierenden Dioden wird die Ausfallsichefieit erhöht und eine gleichmäßige Verteilung der von den Sensoren abgegebenen, vorzugsweise im Infrarotbereich liegenden Messsignale gewährleistet. Zudem wird die Anwesenheit des Benutzers sicher erkannt, selbst wenn er aus einem ungewöhnlichen Winkel in den Augenabschluss blickt.

Die Steuereinrichtung ist mit einer die Verschlussblende betätigenden Antriebseinrichtung und einer Einrichtung zum Einstellen der Ansprechschwelle für die Aktivierung der Antriebseinrichtung verbunden.

Der Antrieb zum Betätigen der Verschlussblende kann beliebig ausgebildet sein und beispielsweise aus einem Miniaturmotor mit einer Getriebe- oder Hebelmechanik zum Öffnen und Schließen der Verschlussblende bestehen. Die Verbindung der Steuereinrichtung mit einer Einrichtung zum Einstellen der Ansprechschwelle zum Aktivieren der Antriebseinrichtung ermöglicht es, den gewünschten Schaltabstand einzustellen, bei dem die Verschlussblende in Abhängigkeit von der Filmempfindlichkeit und Umgebungshelligkeit arbeiten soll, da manche Benutzer einen Hautkontakt mit der Augenmuschel vermeiden und statt dessen den Kopf in minimalem Abstand dazu halten.

Vorzugsweise besteht die Antriebseinrichtung aus einem Hubmagneten, dessen Anker mit der Verschlussblende und dessen Wicklung bzw. Wicklungen mit einem Steuerausgang der Steuereinrichtung verbunden ist bzw. sind.

Diese Ausgestaltung der Antriebseinrichtung ermöglicht extrem kurze Reaktionszeiten zum Öffnen und Schließen der Verschlussblende bei Abgabe eines entsprechenden Steuersignals von der Steuereinrichtung, ist sehr einfach ausgebildet und weist einen nur sehr geringen Energiebedarf auf.

Zusätzlich kann ein Mehrstufenschalter mit einer Automatik-Stellung, in der die Ver schlussblende in Abhängigkeit von der Erfassung eines Auges oder Kopfes eines Benutzers geöffnet oder geschlossen wird, einer Offen-Stellung, in der die Verschlussblende unabhängig von der Erfassung eines Auges oder Kopfes eines Benutzers ständig geöffnet ist und einer Geschlossen-Stellung, in der die Verschlussblende unabhängig von der Erfassung eines Auges oder Kopfes eines Benutzers ständig geschlossen ist, vorgesehen werden.

Ein derartiger Mehrstufenschalter ermöglicht ein Deaktivieren der Automatikfunktion für Spezial anwendungen der Kamera und kann vorzugsweise mit dem für das Einschalten der in den Augenabschluss integrierten Heizelemente kombiniert werden.

Ein Verfahren zum Betrieb eines derartigen Suchersystems einer Kamera ist dadurch gekennzeichnet, dass in den offenen Bereich des Augenabschlusses gerichtete Messsignale mit Wellenlängen abgegeben werden, die außerhalb der Wellenlänge des sichtbaren Lichts liegen, dass die vom Auge oder Kopf einer Person reflektierten Signale empfangen, ausgewertet und in Abhängigkeit von der Auswertung der reflektierten Signale die Verschlussblende geöffnet oder geschlossen wird, wobei die Messsignale in einem Messzyklus abgegeben werden, bei dem die reflektierten Signale vor, während und nach der Abgabe der Messsignale gemessen und die empfangenen reflektierten Signale des Messzyklus miteinander verglichen werden und die Verschlussblende nur dann geöffnet oder geschlossen wird, wenn sich die mittlere Messung des Messzyklus signifikant von den beiden anderen Messungen unterscheidet.

Die berührungslose Erfassung der Anwesenheit eines Auges oder Kopfes einer Person am Augenabschluss kann durch eine Erfassung der Kapazität oder Induktivität im Bereich des Augenabschlusses erfolgen, wobei bei sich verändernder Kapazität oder Induktivität bei Annäherung des Auges oder Kopfes einer Person an den Augenabschluss die Verschlussblende geöffnet oder geschlossen wird.

Alternativ können in den offenen Bereich des Augenabschlusses gerichtete Messsignale mit Wellenlängen abgegeben werden, die außerhalb der Wellenlänge des sichtbaren Lichts liegen, wobei die vom Auge oder Kopf einer Person reflektierten Signale empfangen, ausgewertet und in Abhängigkeit von der Auswertung der reflektierten Signale die Verschlussblende geöffnet oder geschlossen wird.

Um ein fehlerhaftes Öffnen der Verschlussblende aufgrund des Eindringens von Fremdlicht in den Augenabschluss zu verhindern, wird vorzugsweise ein Messzyklus durchfahren, bei dem die reflektierten Signale vor, während und nach der Abgabe der Messsignale gemessen und die empfangenen, reflektierten Signale des Messzyklus miteinander verglichen werden und in Abhängigkeit vom Vergleich die Verschlussblende geöffnet oder geschlossen wird.

Unterscheidet sich die mittlere, während der Abgabe eines Messsignals erfolgende Messung des reflektierten Signals nicht signifikant von den beiden Messungen vor und nach der Abgabe des Messsignals, so weist dies darauf hin, dass bei der Messung vor und nach der Abgabe des Messsignals Fremdlicht erfasst wurde, da zu diesen Zeitpunkten kein Messsignal abgegeben wurde. Erst wenn sich die mittlere Messung von den Messungen vor und nach der Abgabe des Messsignals signifikant von den beiden anderen Messungen unterscheidet, sind die Voraussetzungen für ein Öffnen der Verschlussblende gegeben.

Anhand eines in der Zeichnung dargestellten Ausführungsbeispieles soll der der Erfindung zugrunde liegende Gedanke näher erläutert werden. Es zeigen:
- Fig. 1: eine schematische Darstellung des Filmaufnahmestrahlengangs einer Laufbildkamera und eines davon in das Suchersystem der Laufbildkamera abgezweigten Sucherstrahlengangs;
- Fig. 2: einen Längsschnitt durch den Sucherabschluss des Suchersystems mit einem als Augenmuschel ausgebildeten Augenabschluss und einer Verschlussblende;
- Fig. 3: eine Draufsicht auf den Sucherabschluss mit einem Hubmagneten zum Betätigen der Verschlussblende und Sensoren zur Erfassung eines Benutzers; Faltenbalg ausgebildeten
- Fig. 4: eine Einzeldarstellung eines als Faltenbale ausgebildeten Augenabschlusses und
- Fig. 5: ein Blockschaltbild der Sensor- und Steuereinrichtung zum Ansteuern der Verschlussblende.

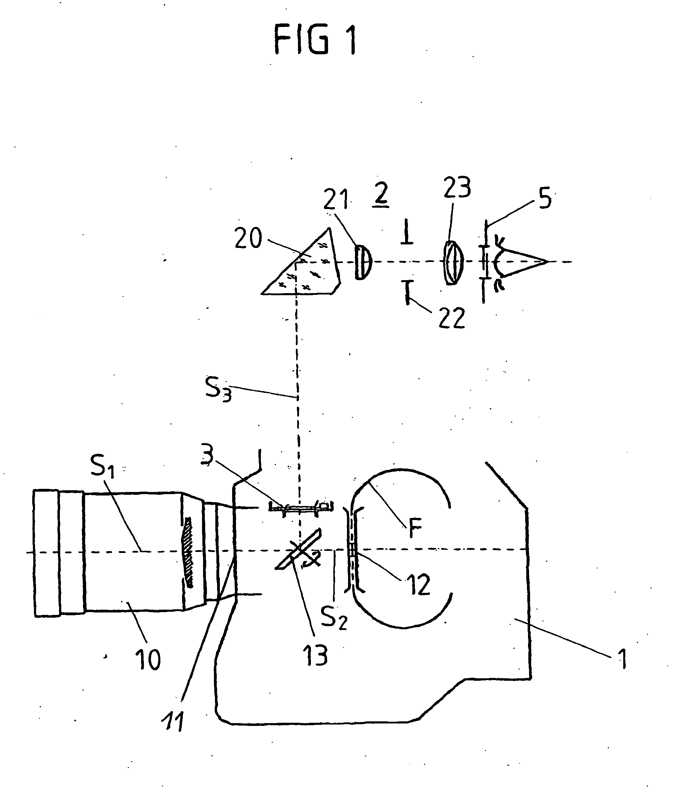

Fig. 1 zeigt eine teilweise geschnittene Seitenansicht einer Laufbüdkamera mit einer schematischen Darstellung der Strahlengänge der Laufbildkamera. Die Laufbildkamera enthält ein teilweise geschnittenes Kameragehäuse 1 mit einem Objektivträger 11 zur Festlegung eines Objektivs 10 und einem Bildfenster 12 im Innem des Kameragehäuses 1, an dem ein Laufbildfilm F intermittierend vorbeibewegt wird.

Eine rotierende Spiegelblende - 13 gibt den durch das Objektiv 10 einfallenden Filmaufnahmestrahlengang S1 periodisch als Filmbelichtungsstrahlengang S2 zur Belichtung eines im Bildfenster 12 stehenden Filmbildes des Laufbildfilmes F frei bzw. reflektiert den Filmaufnahmestrahlengang S1 während des Filmtransports als Sucherstrahlengang S3 in ein Suchersystem 2. An der optisch identischen Ebene wie der Bildebene am Bildfenster 12 ist im Sucherstrahlengang S3 eine Vorrichtung zur Bildbetrachtung bzw. Bildbeurteilung angeordnet, die aus einer Mattscheibe oder Faserplatte 3 besteht, auf die ein Abbild des aufzunehmenden Objekts reflektiert wird, wenn sich die reflektierende Oberfläche der rotierenden Spiegelblende 13 im Filmaufnahmestrahlengang S1 befindet, während der Filmtransportmechanismus den Laufbildfilm F um ein Filmbild im Bildfenster 12 weitertransportiert.

Der Sucherstrahlengang S3 wird mittels eines Umlenkprismas 20 in eine für die Bildbetrachtung und Bildbeurteilung passende Richtung geführt und von einer Übertragungsoptik 21 als reelles Sucherbild in der Ebene einer Bildfeldblende 22 abgebildet, wo es durch ein Okular 23 betrachtet werden kann.

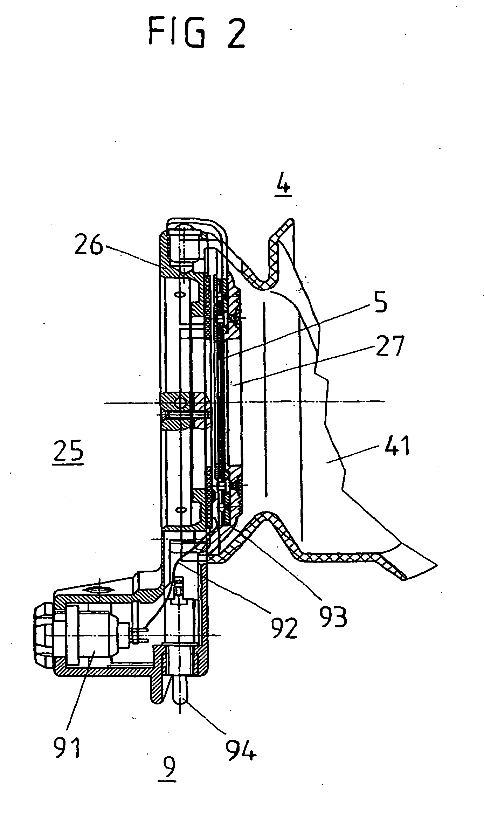

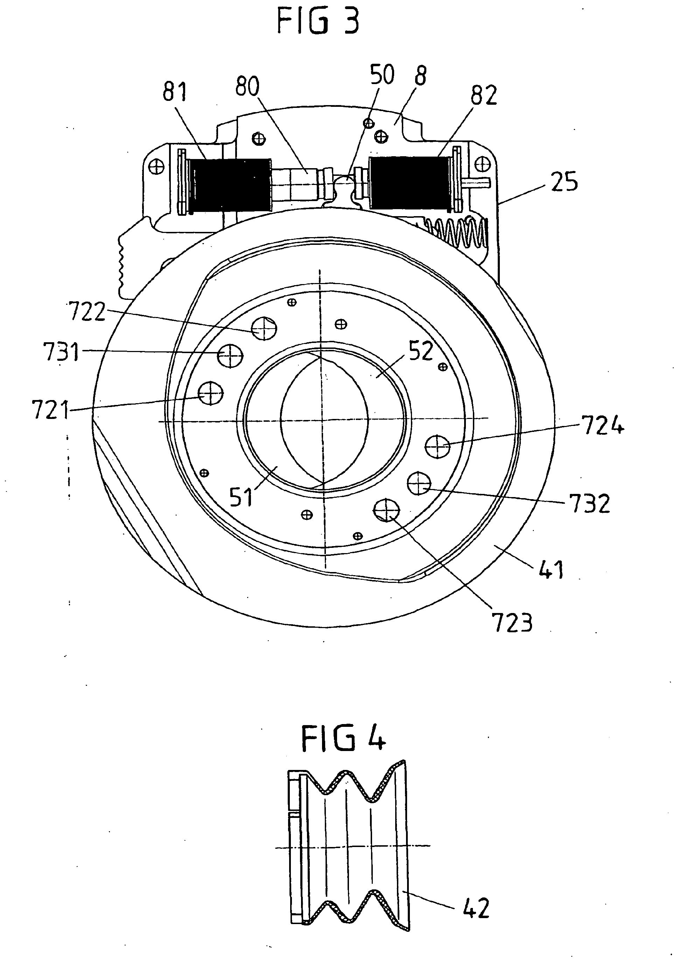

Der in den Fig. 2 und 3 im Längsschnitt und in einer Draufsicht von der Benutzerseite dargestellte Sucherabschluss 25 des Suchersystems 2 enthält einen Augenabschluss 4, der in Fig. 2 aus einer an das Gesichtsfeld um das Auge eines Bildbetrachters oder Kameramanns anatomisch angepassten Augenmuschel 41 besteht, die gemäß der Einzeldarstellung in Fig. 4 durch einen als Faltenbalg 42 ausgebildeten Augenabschluss 4 ersetzt werden kann. Weiterhin weist der Sucherabschluss 25 ein Koppelelement 26 zum Verbinden des Sucherabschlusses 25 mit dem das Umlenkprisma 20, die Übertragungsoptik 2, die Bildfeldblende 22 und das Okular 23 enthaltenden Kamerasucher, einen optionalen. Linsenhalter 27 zur Aufnahme einer Sehfehler des Bildbetrachters ausgleichenden Korrekturlinse und eine Heizung 9 zum Beheizen des Sucherabschlusses 25 und/oder des Linsenhalters 27 auf, die ein Beschlagen des Okulars 23 verhindert, wenn sich die Laufbildkamera in kalter Umgebung befindet und der Bildbetrachter bzw. Kameramann in den Sucher sieht.

Die Heizung 9 weist mehrere in den Linsenhalter 27 oder den Sucherabschluss 25 eingelassene oder auf deren Oberfläche aufgebrachte Heizelemente 93 auf, die über eine elektrische Leitung 92 und einen Schalter 94 zum Ein- und Ausschalten der Heizung 9 mit einem Stecker 91 verbunden sind, der an die Stromversorgung der Laufbildkamera angeschlossen werden kann.

Wenn der Kameramann sein Auge von dem Augenabschluss 4 entfernt, kann Licht in das Suchersystem 2 der Laufbildkamera eintreten, das als Fremdlicht entgegengesetzt zur Richtung des Sucherstrahlenganges S3 in den Filmaufnahmestrahlengang S1 und damit über den Filmbelichtungsstrahlengang S2 auf den zu belichtenden Film F gelangen und dadurch Filmbilder unbrauchbar machen. Dabei genügen in Abhängigkeit von der Empfindlichkeit des Filmes F und der Helligkeit des aufzunehmenden Objekts bereits geringe Fremdlichtmengen, um den entsprechenden Filmabschnitt unbrauchbar zu machen.

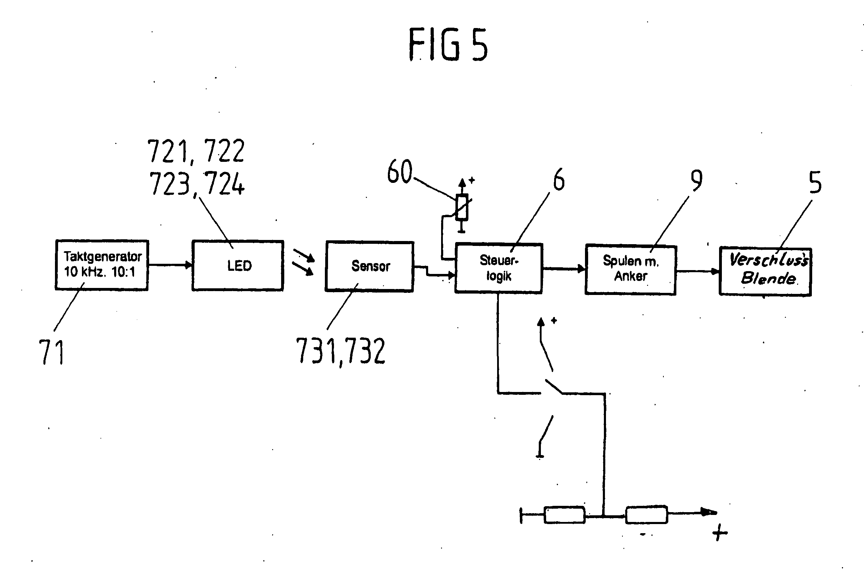

Zum Blockieren eines derartigen Fremdlichteinfalls ist eine Verschlussblende 5 im Sucherabschluss 25 vorgesehen, deren Blendenflügel 51, 52 gemäß Fig. 3 mit einer Antriebseinrichtung 8 verbunden sind, die gemäß Fig. 5 von einer Steuereinrichtung 6 angesteuert wird. Die Steuereinrichtung 6 ist wiederum mit einer Sensoreinrichtung 7 verbunden, die auf das Auge oder den Kopf eines Bildbetrachters oder Kameramanns ausgerichtet ist und das Vorhandensein bzw. gegebenenfalls den Abstand eines Auges oder Kopfes vom Augenabschluss 4 erfasst und ein Sensorsignal an die Steuereinrichtung 6 abgibt, die bei einer Erfassung des Auges des Bildbetrachters oder Kameramanns die Antriebseinrichtung 8 zum Öffnen der Verschlussblende 5 ansteuert oder die Verschlussblende 5 schließt, wenn das Auge oder der Kopf des Bildbetrachters bzw. Kameramanns vom Augenabschluss um ein vorgegebenes Maß entfernt wird.

Die Sensoreinrichtung 7 besteht entsprechend der in Fig. 3 dargestellten Draufsicht auf den Sucherabschluss 25 von der Betrachterseite aus zwei diametral zueinander am Umfang der Sucheröffnung angeordneten Sensoren mit jeweils zwei Licht emittierenden Dioden 721, 722 bzw. 723, 724 und einer zwischen den Licht emittierenden Dioden 721, 722, 723, 724 angeordneten Fotodiode oder einem Fototransistor 731, 732. Gemäß dem in Fig. 5 dargestellten Blockschaltbild weist die Sensoreinrichtung 7 einen Taktgenerator 71 auf, der eine Taktfrequenz von 10 kHz im Verhältnis 10:1 herabsetzt und die Licht emittierenden Dioden 721, 722, 723, 724 ansteuert, die kurze Lichtblitze 74 vorzugsweise im infraroten Bereich in den Augenabschluss 4, d.h. in Richtung eines am Augenabschluss 4 anliegenden Auges abgeben. Die Fotodioden bzw. der Fototransistor 731, 732 empfangen die von den Licht emittierenden Dioden 721, 722, 723, 724 abgegebenen Lichtblitze 74 und geben bei Empfang ein Sensorsignal an einen Eingang der Steuereinrichtung 6 ab.

Die Licht emittierenden Dioden 721, 722 bzw. 723, 724 und die Fotodioden oder Fototransistoren 731, 732 sind vorzugsweise als Infrarot-Reflexlichtschranken angeordnet und ausgebildet, die sehr kurze Infrarot-Lichtblitze abgeben und auf den Empfang dieser sehr kurzen Infrarot-Lichtblitze abgestimmt sind. Dadurch tritt weder eine Beeinträchtigung bei der Bildbetrachtung noch eine Verfälschung der Messung durch Reflektionen im Bereich des Augenabschlusses auf und die Belastung des Auges des Betrachters wird ist vernachlässigbar klein und liegt um den Faktor 10 unterhalb der zulässigen Augenbelastung. Außerdem wird durch getaktete Lichtsignale in der Auswertung sicher zwischen gewollten Lichtblitzen und ungewolltem Fremdlicht unterschieden. Die Auswerteschaltung misst vor dem Aussenden der Lichtblitze das Signal des Sensors, während des Aussendens der Lichtblitze und nach dem Aussenden der Lichtblitze. Treten bei den drei Messungen keine signifikanten Helligkeitsunterschiede am Sensor auf, so kann unzweideutig auf das Vorhandensein von Fremdlicht im Bereich des Augenabschlusses geschlossen werden. Ist der erfasste Messwert des reflektierten Signals während des Aussendens der Lichtblitze dagegen signifikant höher als davor und danach, so ist die Bedingung für ein Öffnen der Verschlussblende erfüllt.

Die Steuereinrichtung 6 ist eingangsseitig mit einem Potentiometer 60 zur Einstellung einer Ansprechschwelle verbunden. Ausgangsseitig ist die Steuereinrichtung 6 mit der Antriebseinrichtung 8 verbunden, die in der in Fig. 3 dargestellten bevorzugten Ausführungsform aus einem Hubmagneten besteht, dessen Wicklungen 81, 82 mit dem Ansteuerausgang der Steuereinrichtung 6 verbunden ist und dessen Anker 80 über einen Schwenkhebel 50 mit den Flügeln 51, 52 der Verschlussblende 5 gekoppelt ist, so dass bei einer vom Ausgang der Steuereinrichtung 6 abgegebenen Steuerspannung der Anker 80 des Hubmagneten angezogen und die Verschlussblende 5 geschlossen wird oder im entgegen gesetzten Sinn geöffnet wird.

Ein mit dem Hubmagneten oder der Verschlussblende 5 gekoppelter Kontakt gibt eine Rückmeldung an einen Eingang der Steuereinrichtung 6 zur Angabe des Öffnungs- oder Schließzustandes der Verschlussblende 5.

Zusätzlich kann ein in der Zeichnung nicht dargestellter Mehrstufenschalter vorgesehen werden, der die Möglichkeit gibt, die Verschlussautomatik abzuschalten und die Verschlussblende immer geöffnet oder immer geschlossen zu halten. Zu diesem Zweck weist der Mehrstufenschalter eine Schaltstellung "AUF" für die permanent geöffnete Stellung der Verschlussblende, eine Schaltstellung "ZU" für die permanent geschlossene Stellung der Verschlussblende und eine Schaltstellung "AUTOMATIK" für die Aktivierung der Verschlussautomatik auf. Ergänzend kann der Mehrstufenschalter mit dem Schalter 94 für die Augenmuschelheizung 9 kombiniert werden, so dass nur ein Schalter am Sucherabschluss 25 vorgesehen ist.

### Bezugszeichenliste

| | |
|---|---|
| 1 | Kameragehäuse |
| 2 | Suchersystem |
| 3 | Mattscheibe oder Faserplatte |
| 4 | Augenabschluss |
| 5 | Verschlussblende |
| 6 | Steuereinrichtung |
| 7 | Sensoreinrichtung |
| 8 | Antriebseinrichtung (Hubmagnet) |
| 9 | Heizung |
| 10 | Objektiv |
| 11 | Objektivträger |
| 12 | Bildfenster |
| 13 | rotierende Spiegelblende |
| 20 | Umlenkprisma |
| 21 | Übertragungsoptik |
| 22 | Bildfeldblende |
| 23 | Okular |
| 25 | Sucherabschluss |
| 26 | Koppelelement |
| 27 | Linsenhalter |
| 41 | Augenmuschel |
| 42 | Faltenbalg |
| 50 | Schwenkhebel |
| 51, 52 | Blendenflügel |
| 60 | Potentiometer |
| 71 | Taktgenerator |
| 74 | Lichtblitze |
| 80 | Anker |
| 81, 82 | Wicklungen |
| 721 - 724 | Licht emittierende Dioden |
| 731, 732 | Fotodiode oder Fototransistor |
| 91 | Stecker |
| 92 | elektrische Leitung |
| 93 | Heizelemente |
| 94 | Schalter |
| F | Laufbildfilm |
| S1 | Filmaufnahmestrahlengang |
| S2 | Filmbelichtungsstrahlengang |
| S3 | Sucherstrahlengang |

## Patentansprüche

1. Suchersystem für eine Kamera, insbesondere für eine Laufbildkamera, in dem ein von einem Aufnahmestrahlengang (S1) zur Flmbelichtung abgezweigter Sucherstrahlengang (S3) verläuft, mit einem Okular (23), einem Augenabschluss (4), einer Verschlussblende (5), einer Sensoreinrichtung (71, 721 - 724, 731, 732), einer Steuereinrichtung (6) und einer die Verschlussblende (5) betätigenden Antriebseinrichtung (8),
wobei die Sensoreinrichtung (71, 721 - 724, 731, 732) aus mindestens einem Sender (721 - 724), der in den Augenabschluss gerichtete Signale mit Wellenlängen abgibt, die außerhalb der Wellenlänge sichtbaren Lichts liegen, und mindestens einem Empfänger (731, 732) besteht, der auf die vom Sender (721 - 724) abgegebenen Signale abgestimmt ist, die von einem Auge oder Kopf einer betrachtenden Person reflektierten Signale empfängt und in Abhängigkeit vom Signalempfang Sensorsignale an die Steuereinrichtung (6) abgibt, und wobei die Sensoreinrichtung (71, 721 -724, 731, 732) in einem die Verschiussblende (5) und die Antriebseinrichtung (8) enthaltenden Sucherabschluss (25) angeordnet ist, der ein Koppelelement (26) zum Verbinden des Sucherabschlusses (25) mit dem kamerasucher aufweist.

2. Suchersystem nach Anspruch 1, **dadurch gekennzeichnet, dass** der Sucherabschluss (25) einen Linsenhalter (27) zur Aufnahme einer Sehfehler des Bildbetrachters ausgleichenden Korrekturlinse enthält.

3. Suchersystem nach Anspruch 1 oder 2, **dadurch gekennzeichnet, dass** der Sucherabschluss (25) eine Heizung (9) zum Beheizen des Sucherabschlusses (25) und/oder des Linsenhalters (27) aufweist.

4. Suchersystem nach mindestens einem der vorangehenden Ansprüche, **dadurch gekennzaichnet,** dass die Sensoreinrichtung (7) aus einer Reflexlichtschranke, insbesondere einer sehr kurze Lichtblitze aussendenden und empfangenden Infrarot Reflexlichtschranke, besteht.

5. Suchersystem nach mindestens einem der vorangehenden Ansprüche, **dadurch gekennzeichnet, dass** mehrere Sensoren (721 - 724; 731, 732) am Umfang des Sucherabschiusses (25) verteilt angeordnet sind, die mindestens eine Licht emittierende Diode (721 - 724) als Sender und mindestens eine Fotodiode oder einen Fototransistor (731, 732) als Empfänger aufweisen.

6. Suchersystem nach Anspruch 5, **dadurch gekennzeichnet, dass** jeweils zwei Licht emittierende Dioden (721 - 724) und eine Fotodlode oder ein Fototransistor (731, 732) einen Sensor bilden, und dass die Fotodiode oder der Fototransistor (731, 732) zwischen den Licht emittierenden Dioden (721 - 724) angeordnet ist.

7. Suchersystem nach Anspruch 5, **dadurch gekannzeichnet,** dass zwei Sensoren (721 - 724; 731, 732) diametral zueinander am Umfang des Sucherabschlusses (25) angeordnet sind.

8. Suchersystem nach mindestens einem der vorangehenden Ansprüche, **dadurch gekennzeichnet, dass** die Steuereinrichtung (6) mit einer Einrichtung (60) zum Einstellen der Ansprechschwelle für die Aktivierung der Antriebseinrichtung (8) verbunden ist.

9. Suchersystem nach mindestens einem der vorangehenden Ansprüche, **dadurch gekennzeichnet, dass** die Antriebseinrichtung (8) aus einem Hubmagneten besteht, dessen Anker (80) mit der Verschlussblende (5) und dessen Wicklung oder Wicklungen (81, 82) mit einem Steuerausgang der Steuereinrichtung (6) verbunden ist bzw. sind.

10. Suchersystem nach mindestens einem der vorangehenden Ansprüche, **gekennzeichnet durch** einen Mehrstufenschafter mit einer Automatikfstellung, in der die Verschlussblende (5) in Abhängigkeit von der Erfassung eines Auges oder Kopfes eines Benutzers geöffnet oder geschlossen wird, einer Offen-Stellung, in der die Verschlussblende (5) unabhängig von der Erfassung eines Auges oder Kopfes eines Benutzers ständig geöffnet ist und einer Geschlossen-Stellung, in der die Verschlussblende (5) unabhängig von der Erfassung eines Auges oder Kopfes eines Benutzers ständig geschlossen ist.

11. Verfahren zum Betrieb eines Suchersystems nach mindestens einem der vorangehenden Ansprüche,
**dadurch gekennzeichnet,**
**dass** In den offenen Bereich des Augenabschlusses (4) gerichtete Messsignale mit Wellenlängen abgegeben werden, die außerhalb der Wellenlänge des sichtbaren Lichts liegen, dass die vom Auge oder Kopf einer Person reflektierten Signale empfangen, ausgewertet und in Abhängigkeit von der Auswertung der reflektierten Signale die Verschlussblende (5) geöffnet oder geschlossen wird, wobei die Messsignale in einem Messzyklus abgegeben werden, bei dem die reflektierte Signale vor, während und nach der Abgabe der Messsignale gemessen und die empfangenen reflektierten Signale des Messzyklus miteinander verglichen werden und die Verschlussblende (5) nur dann geöffnet oder geschlossen wird, wenn sich die mittlere Messung des Messzyklus signifikant von den beiden anderen Messungen unterscheidet.

## Claims

1. Viewfinder system for a camera, in particular for a movie camera, in which there runs a viewfinder beam path (S3) that is diverted from a recording beam path (S1) for film exposure, having an eyepiece (23), an eye closure (4), a shutter (5), a sensor device (71, 721-724, 731, 732), a control device (6) and a driving device (8) which actuates the shutter (5), wherein the sensor device (71, 721-724, 731, 732) consists of at least one transmitter (721-724) that outputs signals, directed into the eye closure, with wavelengths that lie outside the wavelength of visible light, and at least one receiver (731, 732) that is tuned to the signals output by the transmitter (721-724), receives the signals reflected by an eye or head of a person viewing, and outputs sensor signals to the control device (6) as a function of the signal reception and wherein the sensor device (71, 721-724, 731, 732) is arranged in a viewfinder closure (25) comprising the shutter (5) and the driving device (8), which viewfinder closure (25) has a coupling element (26) for connecting the viewfinder closure (25) to the camera viewfinder.

2. Viewfinder system according to Claim 1, **characterized in that** the viewfinder closure (25) includes a lens holder (27) for accommodating a correction lens compensating the vision defects of the picture viewer.

3. Viewfinder system according to Claim 1 or 2, **characterized in that** the viewfinder closure (25) has a heater (9) for heating the viewfinder closure (25) and/or the lens holder (27).

4. Viewfinder system according to at least one of the preceding claims, **characterized in that** the sensor device (7) consists of a reflected light barrier, in particular an infrared reflected light barrier emitting and receiving very short light flashes.

5. Viewfinder system according to at least one of the preceding claims, **characterized in that** a number of sensors (721-724; 731, 732) are arranged distributed on the circumference of the viewfinder closure (25), which have at least one light emitting diode (721-724) as transmitter, and at least one photodiode or one phototransistor (731, 732) as receiver.

6. Viewfinder system according to Claim 5, **characterized in that** in each case two light emitting diodes (721-724) and a photodiode or a phototransistor (731, 732) form a sensor, and **in that** the photodiode or the phototransistor (731, 732) is arranged between the light emitting diodes (721-724).

7. Viewfinder system according to Claim 5, **characterized in that** two sensors (721-724; 731, 732) are arranged diametrically relative to one another on the circumference of the viewfinder closure (25).

8. Viewfinder system according to at least one of the preceding claims, **characterized in that** the control device (6) is connected to a device (60) for setting the response threshold for activating the driving device (8).

9. Viewfinder system according to at least one of the preceding claims, **characterized in that** the driving device (8) consists of a lifting magnet whose armature (80) is connected to the shutter (5), and whose winding or windings (81, 82) is or are connected to a control output of the control device (6).

10. Viewfinder system according to at least one of the preceding claims, **characterized by** a multistage switch with an automatic position, in which the shutter (5) is opened or closed as a function of the detection of an eye or head of a user, with an open position, in which the shutter (5) is permanently open independently of the detection of an eye or head of a user, and with a closed position, in which the shutter (5) is permanently closed independently of the detection of an eye or head of a user.

11. Method for operating a viewfinder system according to at least one of the preceding claims, **characterized in that** measurement signals directed into the open region of the eye closure (4) are output with wavelengths that lie outside the wavelength of visible light, **in that** the signals reflected by the eye or head of a person are received and evaluated, and the shutter (5) is opened or closed as a function of the evaluation of the reflected signals, wherein the measurement signals are output in a measuring cycle in which the reflected signals are measured before, during and after the output of the measurement signals, and the received reflected signals of the measuring cycle are compared with one another and the shutter (5) is opened or closed only whenever the middle measurement of the measuring cycle differs significantly from the two other measurements.

## Revendications

1. Système de viseur destiné à un appareil photographique, notamment à une caméra, dans lequel s'étend un chemin de faisceau de viseur (S3) bifurquant par rapport à un chemin de faisceau de prise de vue (S1) destiné à l'exposition d'un film, comprenant un oculaire (23), un capuchon d'oeil (4), un obturateur (5), un dispositif à capteurs (71, 721 - 724, 731, 732), un dispositif de commande (6) et un dispositif d'entraînement (8) actionnant l'obturateur (5),
dans lequel le dispositif à capteurs (71, 721 - 724, 731, 732) est constitué d'au moins un émetteur (721 - 724) qui délivre des signaux dirigés dans le capuchon d'oeil ayant des longueurs d'onde se situant à l'extérieur des longueurs d'onde de la lumière visible, et d'au moins un récepteur (731, 732) qui est accordé sur les signaux délivrés par l'émetteur (721 - 724), qui reçoit les signaux réfléchis par un oeil ou la tête d'un observateur et qui délivre au dispositif de commande (6) des signaux de capteur en fonction de la réception de signaux, et dans lequel le dispositif à capteurs (71, 721 - 724, 731, 732) est disposé dans un capuchon de viseur (25) contenant l'obturateur (5) et le dispositif d'entraînement (8), lequel capuchon comprend un élément de couplage (26) destiné à relier le capuchon de viseur (25) au viseur de caméra.

2. Système de viseur selon la revendication 1, **caractérisé en ce que** le capuchon de viseur (25) contient un support de lentille (27) destiné à recevoir une lentille de correction compensant des défauts de vision de l'observateur.

3. Système de viseur selon la revendication 1 ou 2, **caractérisé en ce que** le capuchon de viseur (25) comprend un chauffage (9) destiné à chauffer le capuchon de viseur (25) et/ou le support de lentille (27).

4. Système de viseur selon au moins l'une des revendications précédentes, **caractérisé en ce que** le dispositif à capteurs (7) est constitué d'une barrière de lumière de réflexion et notamment d'une barrière de lumière de réflexion infrarouge émettant et recevant de très courts éclairs lumineux.

5. Système de viseur selon au moins l'une des revendications précédentes, **caractérisé en ce que**, sur la périphérie du capuchon de viseur (25), sont disposés de manière répartie une pluralité de capteurs (721 - 724 ; 731, 732) qui comprennent au moins une diode électroluminescente (721 - 724) en tant qu'émetteur et au moins une photodiode ou un phototransistor (731, 732) en tant que récepteur.

6. Système de viseur selon la revendication 5, **caractérisé en ce que** deux diodes électroluminescentes (721 - 724) et une photodiode ou un phototransistor (731, 732) forment un capteur respectif, et **en ce que** la photodiode ou le phototransistor (731, 732) est disposé entre les diodes électroluminescentes (721 - 724).

7. Système de viseur selon la revendication 5, **caractérisé en ce que** deux capteurs (721 - 724 ; 731, 732) sont disposés diamétralement l'un par rapport à l'autre sur la périphérie du capuchon de viseur (25).

8. Système de viseur selon au moins l'une des revendications précédentes, **caractérisé en ce que** le dispositif de commande (6) est connecté à un dispositif (60) destiné à régler le seuil de réponse pour l'activation du dispositif d'entraînement (8).

9. Système de viseur selon au moins l'une des revendications précédentes, **caractérisé en ce que** le dispositif d'entraînement (8) est constitué d'un aimant de levage dont l'armature (80) est reliée à l'obturateur (5) et dont l'enroulement ou les enroulements (81, 82) est/sont connecté(s) à une sortie de commande du dispositif de commande (6).

10. Système de viseur selon au moins l'une des revendications précédentes, **caractérisé par** un commutateur multipolaire présentant une position automatique à laquelle l'obturateur (5) est ouvert ou fermé en fonction de la détection d'un oeil ou d'une tête d'un utilisateur, une position ouverte à laquelle l'obturateur (5) est ouvert en permanence indépendamment de la détection d'un oeil ou d'une tête d'un utilisateur et une position fermée à laquelle l'obturateur (5) est fermé en permanence indépendamment de la détection d'un oeil ou d'une tête d'un utilisateur.

11. Procédé de mise en fonctionnement d'un système de viseur selon au moins l'une des revendications précédentes, **caractérisé en ce que** des signaux de mesure dirigés dans la zone ouverte du capuchon d'oeil (4) sont délivrés avec des longueurs d'onde se situant à l'extérieur des longueurs d'onde de la lumière visible, **en ce que** les signaux réfléchis par l'oeil ou la tête d'une personne sont reçus et analysés et **en ce que** l'obturateur (5) est ouvert ou fermé en fonction de l'évaluation des signaux réfléchis, les signaux de mesure étant délivrés dans un cycle de mesure lors duquel les signaux réfléchis sont mesurés avant, pendant et après la fourniture des signaux de mesure et les signaux du cycle de mesure réfléchis et reçus sont comparés les uns aux autres et l'obturateur (5) n'est ouvert ou fermé que lorsque la mesure moyenne du cycle de mesure diffère de manière significative des deux autres mesures.
